# EUROPÄISCHE PATENTSCHRIFT

(11) **EP 2 644 427 B1**
(45) Veröffentlichungstag und Bekanntmachung des Hinweises auf die Patenterteilung: **08.04.2015**
(21) Anmeldenummer: 13000692.7
(22) Anmeldetag: 09.02.2013
(51) Int. Cl.: B60K 17/346, B60T 8/1769, B60W 10/14, B60W 10/184

(54) **Steuern mehrerer angetriebener Achsen eines Kraftfahrzeugs**
Control of multiple driven axles of a motor vehicle
Commande de plusieurs axes entraînés d'un véhicule automobile

(30) Priorität: 27.03.2012 DE 102012006176
(43) Veröffentlichungstag der Anmeldung: 02.10.2013
(73) Patentinhaber: WABCO GmbH, 30453 Hannover (DE)
(72) Erfinder: Bensch, Uwe, 30161 Hannover (DE); Metz, Karl-Heinz, 7671 Gaggenau (DE); Röver, Andreas, 31515 Wunstorf (DE); Sienitzki, Arwed, 70329 Stuttgart (DE)

(56) Entgegenhaltungen:
- EP-A2- 0 911 205
- DE-A1- 19 723 324
- DE-B4-102009 053 817
- DE-C2- 3 535 090
- DE-C2- 3 637 594
- US-A- 5 093 790
- US-A1- 2002 033 292

## Beschreibung

Die Erfindung betrifft ein Verfahren zum Steuern mehrerer angetriebener Achsen eines Kraftfahrzeugs gemäß Oberbegriff des Anspruchs 1 sowie ein Kraftfahrzeug gemäß Anspruch 10.

Kraftfahrzeuge mit mehreren angetriebenen Achsen, insbesondere Schwerlastkraftfahrzeuge weisen häufig eine sogenannte Längssperre auf, mittels der Drehzahlen der Achsen zum Erzielen einer besseren Traktion synchronisierbar sind. Sobald die Synchronisation nicht mehr benötigt wird, beispielsweise bei einer Fahrt auf einer normalen Straße bei vergleichsweise hohen Reibwerten, kann die Längssperre deaktiviert werden, sodass die angetriebenen Achsen nicht mehr synchronisiert sind, also unterschiedliche Drehzahlen aufweisen können. Aufgrund von Verspannungen in einem Triebstrang des Kraftfahrzeugs, die während der Synchronisation der angetriebenen Achsen auftreten können, kann es zu einer verzögerten Deaktivierung der Längssperre kommen. Die DE 197 23 324 A1 betrifft ein Verfahren zur Synchronisation zweier sich drehender Teile. In einem Kraftfahrzeug mit einer oder mehreren angetriebenen Achsen sowie entsprechenden Ausgleichs- und/oder Verteilergetrieben zur Kompensation von Drehzahldifferenzen der Räder soll das Durchdrehen von Rädern und/oder Achsen zur Erhaltung der Fahrsicherheit vermieden werden. Hierfür sind in dem Kraftfahrzeug Sperren für die zuvor genannten, vorzugsweise als Differenzialgetriebe ausgebildeten Ausgleichs- und/oder Verteilergetriebe sowie Bremseinrichtungen zur Abbremsung der einzelnen Räder vorhanden, die von einem Steuergerät betätigbar sind. Beim Auftreten einer vorgegebenen Drehzahldifferenz zwischen den Antriebswellen eines Differenzialgetriebes wird zunächst eine Annäherung der Drehzahlen aneinander durch Betätigen der jeweiligen Bremseinrichtung herbeigeführt. Wenn eine bestimmte Annäherungstendenz der Drehzahlen aneinander vorliegt, wird durch Betätigen der Sperre eine Synchronisation der Drehzahlen herbeigeführt. Hierdurch kann bei beliebigem Drehzahlverhalten der drehenden Teile nach einem bestimmten Zeitraum eine Synchronisation dieser Teile herbeigeführt werden, ohne dass hierbei Teile des Kraftfahrzeugs beschädigt werden. Die DE 10 2009 053 817 B4 betrifft ein Fahrzeug mit einer Bremseinrichtung, bei welcher beim Bremsen durch in Kopplungsstellung gebrachte Kopplungsmittel die Vorderräder einer Vorderachse und die Hinterräder wenigstens einer Hinterachse miteinander stark gekoppelt sind und zwischen den Hinterrädern und den Vorderrädern ein Bremsmoment übertragen wird Die DE 198 59 964 C2 betrifft ein Verfahren zur Steuerung der Bremswirkung an wenigstens einer Radbremse eines vierradgetriebenen Kraftfahrzeugs mit wenigstens einer Hinterachse und einer Vorderachse und mit wenigstens einem im Antriebsstrang des Kraftfahrzeugs angeordneten Differenzial- oder Ausgleichsgetriebe, das zumindest teilweise gesperrt werden kann, wobei eine Bremswirkung in Abhängigkeit einer Differenz von Drehgeschwindigkeiten gesteuert wird, wenn das Differenzial- oder Ausgleichsgetriebe wenigstens teilweise gesperrt ist. Die DE 100 59 507 A1 betrifft ein Verfahren zur Bremskraftverteilungssteuerung für ein Fahrzeug mit direktem Allradantriebsmodus, bei dem eine wirksame Bremskraft nicht behindert und das Fahrgefühl nicht beeinträchtigt werden. Es erfolgt eine Bremskraftverteilungssteuerung bei einem Fahrzeug, das sich in einem direkten Allradantriebsmodus befindet und wobei ein Zustand vorliegt, in welchem die Antiblockiersteuerung gesperrt ist, derart, dass keine Druckreduzierungssteuerung erfolgt oder das Ausmaß der Druckreduzierung begrenzt ist. Die DE 35 35 090 C2 betrifft eine schlupfgeregelte Bremsanlage für allradangetriebene Kraftfahrzeuge. Um längeren Reaktionszeiten auf Bremsdruckänderungen an einer Hinterachse Rechnung zu tragen, erfolgt eine Regelung eines Hinterradbremsdrucks mit einer geringeren Regelfrequenz. Die DE 36 37 594 C2 betrifft eine blockiergeschützte Bremsanlage für ein Fahrzeug mit zuschaltbarem Allradantrieb sowie ein Verfahren zur Steuerung des Bremsdrucks bei zugeschaltetem Allradantrieb. Die US 5 248 020 betrifft ein Antriebssystem für einen Traktor, das entweder in einem Zweirad- oder in einem Vierradbetriebsmodus betreibbar ist. Ein Bremsmoment einer Antriebsquelle des Traktors, das mit einer Verzögerung des Traktors einhergeht, wird verwendet, um im Wesentlichen einen Radschlupf zwischen einem hinteren und einem vorderen Paar von Rädern des Traktors auszugleichen, um eine Bremsleistung des Traktors, insbesondere bei höheren Geschwindigkeiten zu verbessern. Die DE 37 33 661 C2 betrifft ein Antiblockiersystem für Motorfahrzeuge derjenigen Art, bei der das Antriebssystem des Motorfahrzeuges in ein direkt gekoppeltes Vierradantriebssystem schaltbar ist, wobei erste Einrichtungen vorgesehen sind, um zu beurteilen, ob das Antriebssystem des Motorfahrzeuges in das direkt gekoppelte Vierradantriebssystem geschaltet ist, und wobei zweite Einrichtungen vorgesehen sind, die dazu ausgebildet sind, dass dann, wenn das Ergebnis der Beurteilung positiv ist, auf der Basis eines Signals, das sich aus der Beurteilung ergibt, Bremsdruckverminderungsstartpunkte in der Antiblockiersteuerung derart eingestellt werden, dass sie früher erfolgen als dann, wenn das Antriebssystem des Motorfahrzeuges sich in einem anderen als dem direkt gekoppelten Vierradantriebssystem befindet.

Aufgabe der Erfindung ist es, während eines Bremsvorgangs, insbesondere eines Bremsvorgangs mit einer Antiblockierregelung, eine Deaktivierung einer oder mehrerer Längsperre/n, die zum Synchronisieren zwischen mehrere angetriebene Achsen eines den Bremsvorgang durchführenden Kraftfahrzeugs geschaltet sind, zu erleichtern.

Die Aufgabe ist bei einem Verfahren gemäß des Oberbegriffs des Anspruchs 1 durch das Kennzeichen des Anspruchs 1 gelöst. Unter einer Längssperre wird insbesondere eine formschlüssig wirkende Synchronisationsvorrichtung verstanden, die einem Längsdifferenzialgetriebe zum Sperren desselben parallel geschaltet ist, wobei das Längsdifferenzialgetriebe in einen ein Antriebsmoment auf die Achsen übertragenden Triebstrang geschaltet ist, verstanden werden. Unter einer angetriebenen Achse kann jede beliebige Achse des Kraftfahrzeugs verstanden werden, über die ein Antriebsmoment einer Antriebsquelle des Kraftfahrzeugs auf eine von diesem befahrene Fahrbahn übertragbar ist, insbesondere auch eine Vorderachse, insbesondere eine antriebsseitig zuschaltbare Vorderachse. Vorteilhaft kann die Längssperre wesentlich besser deaktiviert werden, wobei eine Fahrzeugstabilität vorteilhaft deutlich gesteigert werden kann. Dies ist insbesondere bei solo fahrenden Sattelzugmaschinen besonders vorteilhaft, um eine unabhängige Bremsung der Vorderachse nach dem Deaktivieren der Längssperre durchführen zu können. Vorteilhaft kann an der Längssperre, insbesondere während einer Druckbegrenzung an einer Hinterachse des Kraftfahrzeugs, ein Nullmoment beziehungsweise ein Nulldurchgang eines über diese übertragenden Drehmoments erfolgen, wobei diese während des Nulldurchgangs vorteilhaft besonders einfach ausrücken kann, insbesondere deaktiviert werden kann.

Eine bevorzugte Ausführungsform des Verfahrens wird gemäß Anspruch 2 durchgeführt. Der zweite Istdruck wird mittels der zweiten Steuerkette dem zweiten Solldruck nachgeführt. Vorteilhaft wird dazu der zweite Solldruck modifiziert, insbesondere erst begrenzt, dann rampenförmig erhöht bis zur einer "normalen" Höhe, die ohne die vorteilhafte Modifikation sofort eingestellt würde. Vorteilhaft erfolgt dadurch das Einstellen des zweiten Istdrucks zumindest zeitweise nicht schnellstmöglich, sondern vorteilhaft mittels des zeitverzögerten Anhebens, was vorteilhaft den Nulldurchgang des über die Längssperre übertragenen Moments und damit deren Deaktivierung beziehungsweise Ausrücken ermöglicht. Vorteilhaft erfolgt an der Längssperre zumindest eine Übertragung eines deutlich verminderten Moments, insbesondere des Nullmoments.

Eine weitere bevorzugte Ausführungsform des Verfahrens wird gemäß Anspruch 3 durchgeführt. Vorteilhaft wird das zeitverzögerte Anheben des zweiten Solldrucks nur dann durchgeführt, falls die Notbremssituation vorliegt, also ein Deaktivieren der Längssperre besonders sinnvoll ist. Unter einer Notbremssituation wird insbesondere eine blockiergeschützte Bremsung verstanden, die gegebenenfalls bei Notbremsungen, jedoch auch bei einem normalen Verzögerungswunsch auftreten kann, der eine höhere Verzögerung als eine tatsächlich mögliche Verzögerung anfordert, die aufgrund vorhandener Reibwerte zwischen einer von dem Kraftfahrzeug befahrenen Fahrbahn und Rädern des Kraftfahrzeugs nicht überschritten werden kann. Für alle anderen Situationen, also Normalbremssituationen, kann der zweite Istdruck entsprechend der Bremsanforderungsgröße und dem daraus ermittelten zweiten Solldruck nachgeführt werden, so dass ein Gesamtübertragungsverhalten für einen Bediener des Kraftfahrzeugs als üblich beziehungsweise normal empfunden wird. Vorteilhaft erfolgt der Eingriff durch das Begrenzen und anschließende zeitverzögerte Anheben nur in der Notbremssituation, wenn das Deaktivieren der Längssperre erforderlich ist. Das Deaktivieren der Längssperre erfolgt insbesondere automatisiert in Abhängigkeit der erkannten Notbremssituation.

Eine weitere bevorzugte Ausführungsform des Verfahrens wird gemäß Anspruch 4 durchgeführt. Vorteilhaft kann eine Rampe einfach gesteuert werden und ermöglicht einen kontinuierlichen Anstieg des zweiten Solldrucks. Vorteilhaft kann so sichergestellt werden, dass sich das über die Längssperre übertragene Moment zumindest stark reduziert, insbesondere den vorteilhaften Nulldurchgang aufweist. Außerdem erzeugt die Rampe ein kontinuierliches Ansteigen des dieser folgenden zweiten Istdrucks und damit einer Bremswirkung an der zweiten Achse, so dass sich trotz des Eingriffes mittels des zeitverzögerten Anhebens ein harmonischer und dennoch ausreichend schneller Aufbau der Bremswirkung an dem Kraftfahrzeug ergibt.

Eine weitere bevorzugte Ausführungsform des Verfahrens wird gemäß Anspruch 5 durchgeführt. Vorteilhaft kann mittels des Steuerns des Startwerts des zweiten Solldrucks erreicht werden, dass schnellstmöglich eine Mindestbremswirkung an der zweiten Achse aufgebaut wird. Der Startwert kann vorteilhaft so gewählt werden, dass die daraus resultierende Bremswirkung an der zweiten Achse möglichst nahe des Nullmoments liegt und dieses vorteilhaft dadurch möglichst am Anfang der Rampe erreicht wird. In einer Grenzfallbetrachtung ist der Startwert der Druckbegrenzung insbesondere mindestens so klein gewählt ist, dass ein Momentnulldurchgang auch dann erreicht werden kann, falls das Kraftfahrzeug leer beziehungsweise nicht beladen ist (worst case). Dadurch kann der Momentnulldurchgang vorteilhaft in jedem Beladungszustand des Kraftfahrzeugs erzielt werden.

Eine weitere bevorzugte Ausführungsform des Verfahrens wird gemäß Anspruch 6 durchgeführt. Vorteilhaft wird mittels der Rampe der zweite Solldruck so lange angehoben, bis dieser der Bremsanforderungsgröße entspricht, insbesondere eine maximale Bremswirkung an der zweiten Achse bewirkt. Der zweite Solldruck wird also auf einen Maximalwert eingestellt, falls die Bremsanforderungsgröße dies anfordert.

Eine weitere bevorzugte Ausführungsform des Verfahrens wird gemäß Anspruch 7 durchgeführt. Vorteilhaft kann mittels des Zeitintervalls vorgegeben werden, wie lange der Startwert gehalten werden soll. Vorteilhaft kann während des Haltens des Startwertes ein Übertragungsverhalten der Längssperre, insbesondere ein Zeitverhalten der Längssperre berücksichtigt werden. Vorteilhaft kann der Startwert mittels des Zeitintervalls so lange gehalten werden, bis die Längssperre anspricht, also tatsächlich öffnet beziehungsweise einen entsprechenden Stellvorgang durchführt, der zum Öffnen führt, falls die Längssperre momentenfrei oder zumindest nur mit einem geringen Moment belastet ist.

Eine weitere bevorzugte Ausführungsform des Verfahrens wird gemäß Anspruch 8 durchgeführt. Vorteilhaft kann ein gegebenenfalls bereits angestiegener zweiter Solldruck nach dem Erkennen der Notbremssituation auf den Startwert zurückgesetzt werden. Vorteilhaft kann so auch trotz des bereits angestiegenen zweiten Solldrucks, der bereits ein Verklemmen der Längssperre bewirken würde, das vorteilhafte zeitverzögerte Anheben zum Deaktivieren der Längssperre durchgeführt werden.

Eine weitere bevorzugte Ausführungsform des Verfahrens wird gemäß Anspruch 9 durchgeführt. Vorteilhaft liegt üblicherweise an der Vorderachse des Kraftfahrzeugs eine höhere Bremskraft an, so dass das erfindungsgemäße Verfahren vorteilhaft an der Hinterachse zur Anwendung kommt, wobei dadurch nur auf ein Minimum an Gesamt-Bremskraft verzichtet werden muss.

Die Aufgabe ist außerdem bei einem Kraftfahrzeug gemäß des Oberbegriffs des Anspruchs 10 durch das Kennzeichen des Anspruchs 10 gelöst. Das Kraftfahrzeug ist insbesondere eingerichtet, ausgelegt, konstruiert und/oder ausgerüstet mit einer Software zum Durchführen eines vorab beschriebenen Verfahrens. Es ergeben sich die vorab beschriebenen Vorteile.

Weitere Vorteile, Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist. Gleiche, ähnliche und/oder funktionsgleiche Teile sind mit gleichen Bezugszeichen versehen.

Es zeigen:
- Fig. 1: Eine schematische Ansicht eines allradangetriebenen Kraftfahrzeugs;
- Fig. 2: Ein Blockschaltbild zur Betätigung einer Bremse des in Fig. 1 dargestellten Kraftfahrzeugs; und
- Fig. 3: Ein Schaubild einer Notbremssituation, wobei an einer Hinterachse des in Fig. 1 gezeigten Kraftfahrzeugs ein Bremsdruck zeitverzögert mittels einer Rampe angehoben wird.

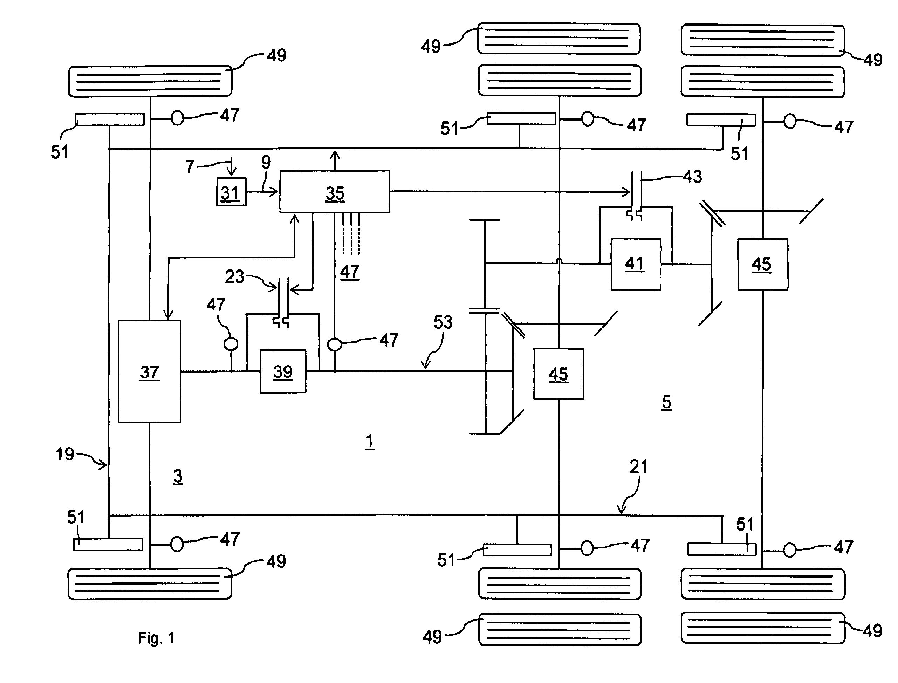

Fig. 1 zeigt eine schematische Ansicht einer Antriebseinheit eines nur teilweise dargestellten Kraftfahrzeugs 1. Die Antriebseinheit des Kraftfahrzeugs 1 weist eine erste Achse 3 und eine zweite Achse 5 auf. Die erste Achse 3 ist eine Vorderachse des Kraftfahrzeugs 1. Die zweite Achse 5 ist eine Hinterachse des Kraftfahrzeugs 1, wobei diese als Tandemachse ausgebildet ist, also zwei Teilachsen aufweist. Die erste Achse 3 und die zwei Teilachsen der zweiten Achse 5 sind über einen Triebstrang 53 mittels einer Antriebsquelle des Kraftfahrzeugs 1 antreibbar. Die Antriebsquelle 37 und ein der ersten Achse 3 zugeordnetes Differentialgetriebe sind in Figur 1 vereinfachend mittels eines Rechtecks 37 symbolisiert. Zum Ausgleichen von Drehzahldifferenzen zwischen einzelnen Rädern 49 des Kraftfahrzeugs 1 sind in den Triebstrang 53 ein Längsdifferenzialgetriebe 39 und ein Hinterachslängsdifferenzialgetriebe 41 geschaltet. Das Längsdifferenzialgetriebe 39 dient zum Ausgleichen von zwischen der ersten Achse 3 und der zweiten Achse 5 auftretenden Drehzahldifferenzen. Das Hinterachslängsdifferenzialgetriebe 41 dient zum Ausgleichen von Drehzahldifferenzen der Teilachsen der zweiten Achse 5.

Zum Synchronisieren der Drehzahlen der ersten Achse 3 und der zweiten Achse 5 ist dem Längsdifferenzialgetriebe 39 eine Längssperre 23 parallel geschaltet. Die Längssperre 23 kann als formschlüssige Kupplung ausgelegt sein und dient zum Überbrücken des Längsdifferenzialgetriebes 39. Zum Synchronisieren der Teilachsen der zweiten Achse 5 ist dem Hinterachslängsdifferenzialgetriebe 41 eine Hinterachslängssperre 43 analog der Längssperre 23 parallel geschaltet.

Zum Ausgleichen von Drehzahldifferenzen einzelner Räder 49 der Achsen 3 und 5 weist der Triebstrang 53 außerdem ein Differenzialgetriebe 45 auf.

Zum Abbremsen des Kraftfahrzeugs 1 ist jedem Rad 49 jeweils eine Radbremse 51 zugeordnet. Die einzelnen Radbremsen 51 werden mittels einer Bremssteuerung 35 angesteuert. Die Bremssteuerung 35 ist Drehzahlsensoren 47 nachgeschaltet. Die Drehzahlsensoren 47 sind den Achsen 3, 5 und einzelnen Teilabschnitten des Triebstrangs 53 zugeordnet und dienen zum Erfassen einzelner Drehzahlen der Räder 49 und der Teile des Triebstrangs 53. Zum Erhöhen der Übersichtlichkeit sind in Fig. 1 nicht alle Signalwege zwischen den Drehzahlsensoren 47 und der Bremssteuerung 35 eingezeichnet. Diese sind lediglich mittels drei gepunktet endenden Linien angedeutet.

Zum Abbremsen des Kraftfahrzeugs 1 kann ein nicht näher dargestellter Nutzer des Kraftfahrzeugs 1 über eine Mensch-Maschine-Schnittstelle 31 eine Bedienereingabe 7 tätigen. Mittels der Mensch-Maschine-Schnittstelle 31 ist in Abhängigkeit der Bedienereingabe 7 eine Bremsanforderungsgröße 9 erfassbar, die die Bremssteuerung 35 ansteuert. Die Bremssteuerung 35 setzt die Bremsanforderungsgröße 9 zur Steuerung der Radbremsen 51 in einen auf die erste Achse 3 wirkenden ersten Istdruck 19 und einen auf die Teilachsen der zweiten Achse 5 wirkenden zweiten Istdruck 21 um.

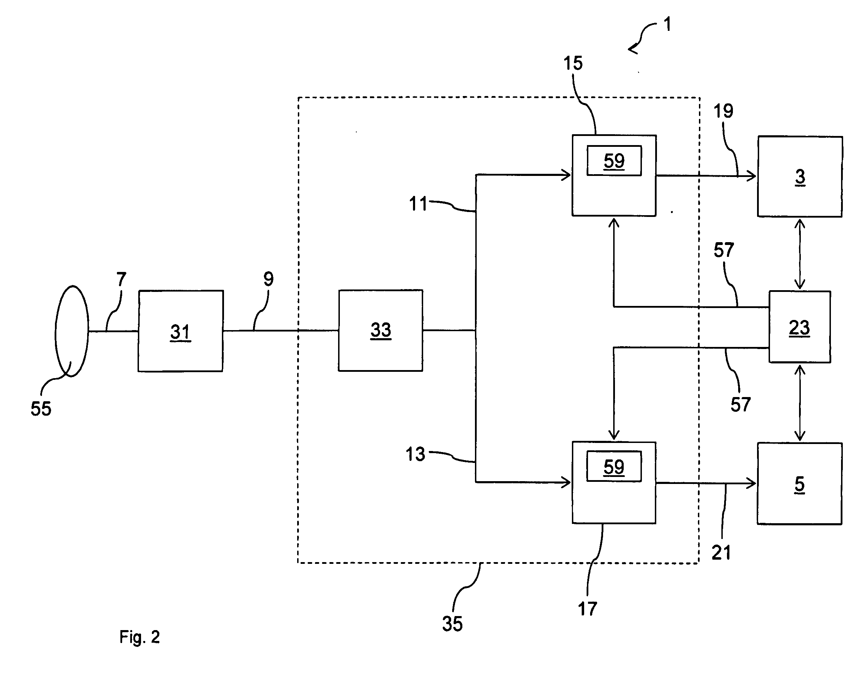

Fig. 2 zeigt ein Blockschaltbild einer Gesamtsteuerkette zwischen dem Nutzer 55 des Kraftfahrzeugs 1 und den abzubremsenden Achsen 3 und 5. Der Nutzer 55 tätigt an der Mensch-Maschine-Schnittstelle 31 die Bedienereingabe 7. Die Mensch-Maschine-Schnittstelle 31 setzt die Bedienereingabe 7 in die Bremsanforderungsgröße 9 um. Die Bremsanforderungsgröße 9 dient als Eingangsgröße einer Vorsteuerung 33 der Bremssteuerung 35. Die Vorsteuerung 33 ermittelt in Abhängigkeit der Bremsanforderungsgröße 9 einen ersten Solldruck 11 und einen zweiten Solldruck 13. Der erste Solldruck 11 wirkt über eine erste Steuerkette 15 auf die erste Achse 3. Der zweite Solldruck 13 wirkt über eine zweite Steuerkette 17 auf die zweite Achse 5. Als Ausgangsgröße weist die erste Steuerkette 15 den zum Abbremsen der ersten Achse 3 erforderlichen Istdruck 19 auf. Analog dazu weist die zweite Steuerkette 17 als Ausgangsgröße den zweiten Istdruck 21 zum Abbremsen der zweiten Achse 5 auf.

Wie in Fig. 2 zu erkennen, ist zwischen die erste Achse 3 und die zweite Achse 5 die Längssperre 23 geschaltet, wobei diese in einem aktivierten Zustand Drehmomente zwischen der ersten Achse 3 und der zweiten Achse 5 überträgt. Während einer mittels der Bremssteuerung 35 gesteuerten Bremsung der ersten Achse 3 und der zweiten Achse 5 wirkt daher die Längssperre 23 als Störgröße 57 auf die Steuerketten 15 und 17.

Die Steuerketten 15 und 17 weisen jeweils eine Antiblockierregelung 59 auf, die unterlagert dann in die Steuerketten 15 und 17 eingreift, falls eines der Räder der ersten Achse 3 oder der zweiten Achse 5 eine Grenze überschreitet.

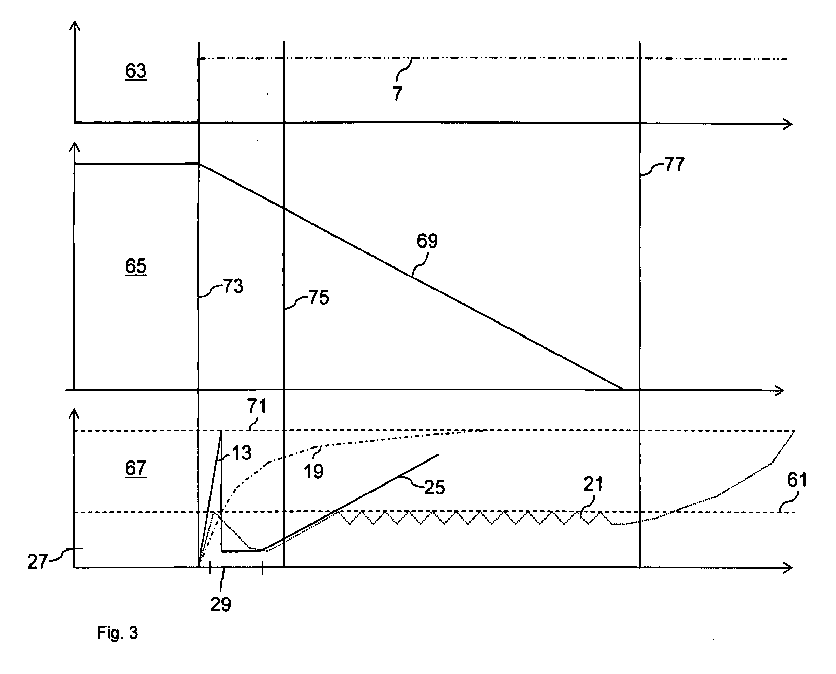

Fig. 3 zeigt ein Schaubild verschiedener in der zweiten Steuerkette 17 während einer Vollbremsung auftretender Größen. Während der Vollbremsung ist die Antiblockierregelung 59 der zweiten Steuerkette 17 aktiv.

In einem ersten Teilschaubild 63 ist mittels eines strichdoppeltpunktierten Graphen die Bedienereingabe 7 über einer Zeit eingezeichnet. Die Bedienereingabe 7 weist idealisiert den Verlauf einer h-Funktion auf, entspricht also einem Bremsschlag, der üblicherweise von einem Bediener bei einer Gefahrenbremsung und/oder Notbremsung an der Mensch-Maschine-Schnittstelle 31 durchgeführt wird.

In einem zweiten Teilschaubild 65 ist ebenfalls über der Zeit mittels eines durchgezogenen Graphen eine Fahrgeschwindigkeit 69 des Kraftfahrzeugs 1 eingezeichnet. In einem dritten Teilschaubild 67 sind ebenfalls über der Zeit weitere Größen der zweiten Steuerkette 17 eingezeichnet.

In dem zweiten Teilschaubild 65 ist zu erkennen, dass in Reaktion auf die Bedienereingabe 7 die Fahrgeschwindigkeit 69 des Kraftfahrzeugs 1 bis auf 0 abnimmt.

In Reaktion auf die Bedienereingabe 7 steigt auch die in Fig. 3 nicht näher eingezeichnete Bremsanforderungsgröße 9 sprunghaft an. In Reaktion darauf wird der zweite Solldruck 13 steil ansteigend auf einen in Fig. 3 gestrichelt eingezeichneten Maximaldruck 71 gestellt. Bei Erreichen des Maximaldrucks 71 wird mittels der Bremssteuerung 35 festgestellt, dass es sich um eine Gefahrenbremsung, also um eine Anforderung einer maximalen Verzögerung handelt. Dabei wird außerdem festgestellt, ob sich die Längssperre 23 in einem aktivierten oder einem deaktivierten Zustand befindet. Falls sich die Längssperre 23 in einem aktivierten Zustand befindet, sendet die Bremssteuerung 35 automatisch ein Signal zum Deaktivieren der Längssperre 23.

Falls die Notbremssituation erkannt ist, setzt die Bremssteuerung 35 den in Fig. 3 durchgezogen eingezeichneten zweiten Solldruck 13 auf einen Startwert 27 herab. Der Startwert 27 wird während eines Zeitintervalls 29, das insbesondere mindestens bis zu einem Start einer Rampe 25 andauert, gehalten. Vorzugsweise ist das Zeitintervall 29 so lange, dass entsprechend eines Zeitverhaltens der Längssperre 23 diese gesichert anspricht, insbesondere deaktivierbar ist, also die erste Achse 3 und die mit dieser bis zur Deaktivierung der Längssperre 23 synchronisierte zweite Achse 5 wieder voneinander unabhängige Drehzahlen aufweisen können. Aufgrund sich an der ersten Achse 3 und der zweiten Achse 5 aufbauender Bremsmomente ist es jedoch möglich, dass diese verklemmt ist, also nicht auslöst. Vorteilhaft kann aufgrund des Herabsetzens des zweiten Solldrucks 13 auch der zweite Istdruck 21, der in Fig. 3 gepunktet eingezeichnet ist, wieder abgebaut werden, so dass dieser aufgrund eines Zeitverhaltens der Radbremsen 51 beziehungsweise der zweiten Steuerkette 17, insbesondere der Antiblockierregelung 59 wieder entsprechend der Vorgabe des zweiten Solldrucks 13 eingestellt ist.

Nach Ablauf des Zeitintervalls 29 wird der zweite Solldruck 13 vorteilhaft entlang der Rampe 25 so lange erhöht, bis dieser zumindest die Grenze 61 übersteigt, insbesondere den Maximaldruck 71 erreicht. Die Grenze 61 der zweiten Achse 5 ist in Fig. 3 mittels einer horizontalen gepunkteten Linie eingezeichnet.

Es ist zu erkennen, dass der zweite Istdruck 21 so lange dem zweiten Solldruck 13 entsprechend der Rampe 25 folgt, bis die Grenze 61, die insbesondere eine Druckgrenze ist, bei der das jeweilige Rad 49 beziehungsweise die Räder zum Blockieren neigen würde/n, genannt Abregeldruck, erreicht ist, also die Antiblockierregelung 59 eingreift.

Außerdem ist in dem dritten Teilschaubild 67 mittels eines strichpunktierten Graphen der erste Istdruck 19 zum Abbremsen der ersten Achse 3 eingezeichnet. Es ist zu erkennen, dass dieser entsprechend eines Zeitverhaltens an den Maximaldruck 71 herangeführt wird.

Mittels senkrechter Linien sind in Fig. 3 ein erster Zeitpunkt 73, ein zweiter Zeitpunkt 75 und ein dritter Zeitpunkt 77 eingezeichnet. Der erste Zeitpunkt 73 markiert einen Beginn des Bremsvorgangs, also der h-förmige Anstieg der Bedienereingabe 7. Der zweite Zeitpunkt 75 markiert einen Zeitbereich innerhalb des Anstiegs der Rampe 25, wobei der zweite Istdruck 21 noch dem zweiten Solldruck 13 folgt. An dem zweiten Zeitpunkt 75 überträgt die Längssperre 23 ein Nullmoment und rückt vorteilhaft aus.

Der dritte Zeitpunkt 77 markiert ein Bremsende, an dem das Kraftfahrzeug 1 zum Stillstand kommt. Es ist zu erkennen, dass nach Bremsende die Antiblockierregelung 59 endet und auch den zweiten Istdruck 21 in einer vorgegebenen Funktion auf den Maximaldruck 71 einstellt, um dadurch ein Wegrollen des Kraftfahrzeugs 1 gesichert zu verhindern.

Durch das Deaktivieren der Längssperre 23 in dem zweiten Zeitpunkt 75 kann vorteilhaft ein Übertragen von Bremsmomenten, insbesondere von der zweiten Achse 5 auf die erste Achse 3 verhindert werden. Vorteilhaft kann dadurch ein Verspannen der Längssperre verhindert werden, wodurch diese automatisch kurze Zeit nach Eintreten der Notbremssituation deaktiviert werden kann. Vorteilhaft kann dadurch eine Fahrzeugstabilität deutlich gesteigert werden, vorteilhaft insbesondere bei Solo-Sattelzugmaschinen, wobei insbesondere eine seperate unabhängige Bremsung der ersten Achse 3 erfolgen kann.

Um ein zusätzliches Verspannen eines Verteilergetriebes des Kraftfahrzeugs 1, insbesondere der Längssperre 23, während eines Bremsvorgangs, insbesondere der Notbremssituation, an der ersten Achse 3, insbesondere der Vorderachse, und der zweiten Achse 5, insbesondere der Hinterachse des Kraftfahrzeugs 1, nicht noch zusätzliche Momente über das Verteilergetriebe zu übertragen, wird vorteilhaft der Notbremssituation, bei der die Antiblockierregelung 59 aktiv ist, der zweite Solldruck 13 an der Hinterachse über die Rampe 25 auf den Solldruck, insbesondere den Maximaldruck 71, gefahren. Damit ein Begrenzungsdruck zu unterschiedlichen Achslasten des Kraftfahrzeugs 1 passt, wird der zweite Solldruck 13 zunächst auf den Startwert 27 gesetzt und von da mit der Rampe 25 so lange erhöht, bis die Grenze 61 -wobei der zweite Solldruck 13 bis zu dem Maximaldruck 71 erhöht wird und die Grenze 61 der Abregeldruck ist, bei dem das Hinterrad zum Blockieren neigt oder im entsprechenden Schlupf laufen würde - erreicht ist. Vorteilhaft kann dadurch auch bei unterschiedlichsten Achslasten des Kraftfahrzeugs 1 gewährleistet werden, dass die Rampe 25 einen Bereich durchläuft, der an dem zweiten Zeitpunkt 75 erreicht ist, an dem die Längssperre 23 ein verringertes, vorteilhaft insbesondere das Nullmoment, überträgt. Vorteilhaft kommt es dadurch nicht oder zumindest weniger zu Verspannungen an der Längssperre 23, so dass diese ausrücken kann. Die Längssperre 23 kann also wesentlich besser deaktiviert werden, wobei vorteilhaft die Fahrzeugstabilität des Kraftfahrzeugs 1 deutlich gesteigert werden kann. Zusammenfassend wird während des Bremsvorgangs, insbesondere der Notbremssituation, bei der die Antiblockierregelung 59 aktiv ist, der zweite Istdruck 21, der insbesondere dem zweiten Solldruck 13 folgt, über die Rampe 25 auf die Grenze 61 gefahren, wobei vorteilhaft mittels diesem zeitverzögerten Anheben Verspannungen des Triebstrangs 53 vermieden werden können.

### Bezugszeichenliste

- 1: Kraftfahrzeug
- 3: erste Achse
- 5: zweite Achse
- 7: Bedienereingabe
- 9: Bremsanforderungsgröße
- 11: erster Solldruck
- 13: zweiter Solldruck
- 15: erste Steuerkette
- 17: zweite Steuerkette
- 19: erster Istdruck
- 21: zweiter Istdruck
- 23: Längssperre
- 25: Rampe
- 27: Startwert
- 29: Zeitintervall
- 31: Mensch-Maschine-Schnittstelle
- 33: Vorsteuerung
- 35: Bremssteuerung
- 37: Rechteck
- 39: Längsdifferenzialgetriebe
- 41: Hinterachslängsdifferenzialgetriebe
- 43: Hinterachslängssperre
- 45: Differenzialgetriebe
- 47: Drehzahlsensoren
- 49: Räder
- 51: Radbremse
- 53: Triebstrang
- 55: Nutzer
- 57: Störgröße
- 59: Antiblockierregelung
- 61: Grenze
- 63: erstes Teilschaubild
- 65: zweites Teilschaubild
- 67: drittes Teilschaubild
- 69: Fahrgeschwindigkeit
- 71: Maximaldruck
- 73: erster Zeitpunkt
- 75: zweiter Zeitpunkt
- 77: dritter Zeitpunkt

## Patentansprüche

1. Verfahren zum Steuern einer ersten (3) und zumindest einer weiteren zweiten (5) angetriebenen Achse eines Kraftfahrzeugs (1), mit:
- Erfassen einer eine Bedienereingabe (7) zum Abbremsen des Kraftfahrzeugs (1) beschreibenden Bremsanforderungsgröße (9),
- Ermitteln eines ersten Solldrucks (11) für die erste Achse (3) und eines zweiten Solldrucks (13) für die zweite Achse (5) in Abhängigkeit der Bremsanforderungsgröße (9),
- Steuern einer bremsend auf die erste Achse (3) wirkenden ersten Steuerkette (15) zum Einstellen eines ersten Istdrucks (19) in Abhängigkeit des ersten Solldrucks (11) und Steuern einer bremsend auf die zweite Achse (5) wirkenden zweiten Steuerkette (17) zum Einstellen eines zweiten Istdrucks (21) in Abhängigkeit des zweiten Solldrucks (13),
**gekennzeichnet durch**:
- zeitverzögertes Anheben des bremsend auf die zweite Achse (5) wirkenden zweiten Istdrucks (21) der zweiten Steuerkette (17),
- Lösen einer drehzahlsynchronisierend zwischen die erste (3) und die zweite (5) Achse geschalteten Längssperre (23) während des zeitverzögerten Anhebens des zweiten Istdrucks (19).

2. Verfahren nach dem vorhergehenden Anspruch,
gekennzeichnet durch:
- zeitverzögertes Anheben des zweiten Solldrucks (13) in Reaktion auf einen Anstieg der Bremsanforderungsgröße (9).

3. Verfahren nach dem vorhergehenden Anspruch,
gekennzeichnet durch:
- Ermitteln eines Beginns einer Notbremssituation,
- zeitverzögertes Anheben des zweiten Solldrucks (13) nur, falls die Notbremssituation vorliegt.

4. Verfahren nach einem der vorhergehenden zwei Ansprüche,
gekennzeichnet durch:
- Steuern einer Rampe (25) des zweiten Solldrucks (13) zum zeitverzögerten Anheben.

5. Verfahren nach dem vorhergehenden Anspruch,
gekennzeichnet durch:
- Beginnen des zeitverzögerten Anhebens **durch** Steuern eines Startwerts (27) des zweiten Solldrucks (13).

6. Verfahren nach dem vorhergehenden Anspruch,
gekennzeichnet durch
- Starten der Rampe (25) auf dem Startwert (27),
- Steuern der Rampe (25), bis der zweite Solldruck (13) entsprechend der Bremsanforderungsgröße (9) eingestellt ist.

7. Verfahren nach dem vorhergehenden Anspruch,
gekennzeichnet durch
- Halten des Startwerts (27) für ein Zeitintervall (29) vor dem Starten der Rampe (25).

8. Verfahren nach einem der vorhergehenden drei Ansprüche,
gekennzeichnet durch
- Steuern des zweiten Solldrucks (13) entsprechend der Bremsanforderungsgröße (9),
- Erkennen der Notbremssituation,
- Rücksetzen des zweiten Solldrucks (13) auf den Startwert (27) falls die Notbremssituation erkannt ist,
- zeitverzögertes Anheben des zweiten Solldrucks (13) nach dem Rücksetzen.

9. Verfahren nach einem der vorhergehenden Ansprüche, wobei die erste Achse (3) eine Vorderachse und die zweite Achse (5) eine Hinterachse des Kraftfahrzeugs (1) ist.

10. Kraftfahrzeug (1), eingerichtet, ausgelegt, konstruiert und/oder ausgerüstet mit einer Software zum Ausführen eines Verfahrens nach einem der vorhergehenden Ansprüche.

## Claims

1. Method for controlling a first (3) and at least a further second (5) driven axle of a motor vehicle (1), comprising:
- detecting a braking request variable (9) which describes an operator input (7) for braking the motor vehicle (1),
- determining a first setpoint pressure (11) for the first axle (3) and a second setpoint pressure (13) for the second axle (5) as a function of the braking request variable (9),
- controlling a first control chain (15) which acts in a braking fashion on the first axle (3) and, in order to set a first actual pressure (19) as a function of the first setpoint pressure (11), and controlling a second control chain (17), which acts in a braking fashion on the second axle (5), in order to set a second actual pressure (21) as a function of the second setpoint pressure (13),
**characterized by**
- delayed raising of the second actual pressure (21), acting in a braking fashion on the second axle (5) of the second control chain (17), and
- releasing a longitudinal lock (23), connected in a rotational-speed-synchronizing fashion between the first (3) and the second (5) axles, during the delayed raising of the second actual pressure (19).

2. Method according to the preceding claim,
**characterized by**:
- delayed raising of the second setpoint pressure (13) in reaction to a raise in the braking request variable (9).

3. Method according to the preceding claim,
**characterized by**:
- determining a start of an emergency braking situation, and
- delayed raising of the second setpoint pressure (13) only if the emergency braking situation is present.

4. Method according to one of the preceding two claims,
**characterized by**:
- controlling a ramp (25) of the second setpoint pressure (13) for the purpose of delayed raising.

5. Method according to the preceding claim,
**characterized by**:
- starting the delayed raising by controlling a starting value (27) of the second setpoint pressure (13).

6. Method according to the preceding claim,
**characterized by**:
- starting the ramp (25) at the starting value (27),
- controlling the ramp (25) until the second setpoint value (13) is set in accordance with the braking request variable (9).

7. Method according to the preceding claim,
**characterized by**:
- holding the starting value (27) for a time interval (29) before the starting of the ramp (25).

8. Method according to one of the preceding three claims,
**characterized by**:
- controlling the.second setpoint pressure (13) in accordance with the braking request variable (9),
- detecting the emergency braking situation,
- resetting the second setpoint value (13) to the starting value (27) if the emergency braking situation is detected,
- delayed raising of the second setpoint pressure (13) after the resetting.

9. Method according to one of the preceding claims, wherein the first axle (3) is a front axle, and the second axle (5) a rear axle of the motor vehicle (1).

10. Motor vehicle (1) configured, embodied, constructed and/or equipped with a software for carrying out a method according to one of the preceding claims.

## Revendications

1. Procédé de commande d'un premier essieu moteur (3) et d'au moins un deuxième essieu moteur (5) d'un véhicule automobile (1), le procédé comportant les étapes qui consistent à :
saisir une grandeur (9) de demande de freinage décrivant une introduction (7) de l'opérateur visant à freiner le véhicule automobile (1),
déterminer une première pression de consigne (11) pour le premier essieu (3) et d'une deuxième pression de consigne (13) pour le deuxième essieu (5) en fonction de la grandeur (9) de demande de freinage,
commander une première chaîne de commande (15) agissant pour freiner le premier essieu (3) en vue d'établir une première pression effective (19) en fonction de la première pression de consigne (11) et commande d'une deuxième chaîne de commande (17) qui agit pour freiner le deuxième essieu (5) en vue d'établir une deuxième pression effective (21) en fonction de la deuxième pression de consigne (13),
**caractérisé par** les étapes qui consistent à :
établir avec un retard la deuxième pression effective (21) de la deuxième chaîne de commande (17) qui agit pour freiner le deuxième essieu (5) et
libérer un blocage longitudinal (23) raccordé entre le premier essieu (3) et le deuxième essieu (5) pour synchronisation des vitesses de rotation pendant l'établissement retardé de la deuxième pression effective (19).

2. Procédé selon la revendication précédente,
**caractérisé par** l'étape qui consiste à :
établir avec retard la deuxième pression de consigne (13) en réaction à une augmentation de la grandeur (9) de demande de freinage.

3. Procédé selon la revendication précédente,
**caractérisé par** les étapes qui consistent à :
déterminer le début d'une situation de freinage d'urgence et
établir avec retard la deuxième pression de consigne (13) uniquement au cas où une situation de freinage d'urgence prévaut.

4. Procédé selon l'une des deux revendications qui précèdent,
**caractérisé par** l'étape qui consiste à :
commander une rampe (25) de la deuxième pression de consigne (13) pour son établissement retardé.

5. Procédé selon l'une des deux revendications qui précèdent,
**caractérisé par** l'étape qui consiste à :
commencer l'établissement retardé par commande d'une valeur initiale (27) de la deuxième pression de consigne (13).

6. Procédé selon la revendication précédente,
**caractérisé par** les étapes qui consistent à :
lancer la rampe (25) à la valeur initiale (27) et
commander la rampe (25) jusqu'à ce que la deuxième pression de consigne (13) se soit établie en correspondance à la grandeur (9) de demande de freinage.

7. Procédé selon l'une des deux revendications qui précèdent,
**caractérisé par** l'étape qui consiste à :
maintenir la valeur initiale (27) pendant un intervalle de temps (29) qui précède le lancement de la rampe (25).

8. Procédé selon l'une des trois revendications qui précèdent,
**caractérisé par** les étapes qui consistent à :
commander la deuxième pression de consigne (13) en fonction de la grandeur (9) de demande de freinage,
détecter la situation de freinage d'urgence,
ramener la deuxième pression de consigne (13) à la valeur initiale (27) au cas où une situation de freinage d'urgence a été détectée,
établir avec retard la deuxième pression de consigne (13) après le retour.

9. Procédé selon l'une des revendications précédentes, dans lequel le premier essieu (3) est un essieu avant et le deuxième essieu (5) un essieu arrière du véhicule automobile (1).

10. Véhicule automobile (1) prévu, conçu, construit et/ou équipé d'un logiciel permettant d'exécuter un procédé selon l'une des revendications précédentes.
